# EUROPEAN PATENT SPECIFICATION

(11) **EP 0 401 427 B1**
(45) Date of publication and mention of the grant of the patent: **28.07.1993**
(21) Application number: 89123905.5
(22) Date of filing: 23.12.1989
(51) Int. Cl.: A23G 1/00

(54) **A cream-containing chocolate and a method for producing it**
Sahne enthaltende Schokolade und Verfahren zu ihrer Herstellung
Chocolat contenant de la crème et méthode pour sa production

(30) Priority: 09.06.1989 JP 145171/89
(43) Date of publication of application: 12.12.1990
(73) Proprietor: LOTTE CO., LTD, Shinjuku-ku Tokyo (JP)
(72) Inventor: Takemori, Toshio, Nerima-ku Tokyo (JP); Tsurumi, Toshinobu, Okegawa-shi Saitama-ken (JP); Takagi, Masahiro, Matsudo-shi Chiba-ken (JP); Ito, Masanori, Misato-shi Saitama-ken (JP)
(74) Representative: Grättinger, Günter

(56) References cited:
- EP-A- 0 317 917
- GB-A- 1 538 750
- US-A- 4 594 259
- PATENT ABSTRACTS OF JAPAN,vol.13,no.15(C-559)(3363),13 January 1989;&JP-A- 63222652 (FUJI OIL CO.LTD.) 16.09.1988
- PATENT ABSTRACTS OF JAPAN,Vol 8, no. 255 (C-253)(1692),21 November 1984; & JP-A-59135841(FUJI SEIYU K.K.) 04.08.1984
- PATENT ABSTRACTS OF JAPAN, vol.9 no. 145 (C287)(1868), 20June 1985; & JP-A-6027339 (Lotte K.K.) 12.02.1985

## Description

The present invention relates to a chocolate which contains a cream, more specifically to a cream-containing chocolate having a fresh milk taste and to a production method thereof in which a cream which is the freshest milk product is mixed directly by kneading to a chocolate without heating above the temperature necessary to shape or mold the chocolate in an ordinary manner.

Generally, whole milk powder, skim milk powder, cream powder and the like in which water is removed are used for chocolate as milk product. However, these powder milk products lose the fresh milk taste during the process of drying and making powder. Therefore, a chocolate in which these are used also does not possess the fresh milk taste.

On the other hand, as a material which are not powdered, there is pure milk fat (butter oil) which may be used for chocolate. This does not suffer the process of drying and making powder, but water is removed, so that it loses the whole water-soluble flavor component, which also cannot provide the fresh milk taste. In addition, in case of using in a large amount, the chocolate loses the snap property and becomes too soft, which is not preferable.

In crumb milk, block milk and the like as a meterial for chocolate, raw milk, nonfat milk and the like are used. However, these are used after mixing raw milk or nonfat milk with cacao liquor or saccharose to treat to dry, with which a chocolate having the fresh milk taste cannot be produced.

By the way, those which are so-called garnish, truffle and the like are produced by mixing chocolate with cream, raw milk, foreign liquors, syrup and the like. Generally, they have a water content not less than 10 %, and usually have a strage property within an extent of about a week. However, because a fresh cream is used in these good garnish and truffle, they have the fresh milk taste. But from a view of chemical system, these have a O/W emulsion system, which is different from that of so-called chocolate in nature.

As described in the above, it can be considered that conventionally, powders such as whole milk powder, skim milk powder, cream powder and the like are generally used as milk products for chocolate, and that as those which are not powder there has only been the butter oil which is substantially free of water.

As a result of investigation for providing a chocolate in which a high water content-containing component is mixed by kneading which is different from the conventional and general chocolate described in the above, it has been found that this purpose can be achieved to some extent by means of a method which was disclosed by the same applicant in Japanese laid-open patent application No. 60-27339. However, in this technology, those which have a moisture content of chocolate above 1.8% and a milk fat content of chocolate above 3 % are not necessarily referred sufficiently. Bearing only the cream which is the freshest milk product in mind, there is a possibility to provide a chocolate in which a high water content-containing component which has a higher water content and is fresher is mixed by kneading.

The object of the present invention is to provide a chocolate and a method for producing it in which a high water content-containing component which has a higher water content and is fresher is mixed by kneading, in which a cream which is the freshest milk product is mixed by kneading directly to a chocolate without heating above the temperature necessary to shape or mold the chocolate in an ordinary manner to provide the fresh milk taste.

According to the present invention, there is provided a cream-containing chocolate which contains about 1.8 to 10 % of moisture content and not less than 3 % of milk fat content, wherein the cream is a W/O type emulsion consisting of not less than 30 % of milk fat content and a lipophilic emulsifier is mixed in a chocolate base material by kneading.

Also according to the present invention, there is provided a method for producing the cream-containing chocolate described in the above, wherein the W/O type emulsion is mixed by kneading at a temperature not more than 45°C to a chocolate base material of tempering type or to a chocolate base material of nontempering type.

In order that the present invention herein described may be more fully understood, the following detailed description is set forth.

In the present invention, a chocolate is intended to generally mean a chocolate in which cacao liquor is blended and a white chocolate in which cacao liquor is not blended, which is not limited to such a chocolate that each component thereof is defined by some rules to especially define a chocolate.

A cream may be produced from a raw milk by separation, in which it is preferable that the milk fat content of the cream is in a range of 30 to 49 %.

A cream may be mixed with a lipophilic emulsifier, emulsified and subjected to phase conversion to produce a W/O type emulsion.

Preferably, the W/O type emulsion may be formed by preparing a mixture comprising a cream material produced from a raw milk by separation and a lipophilic emulsifier of 0.5 to 6 % of the material cream to emulsify to carry out phase conversion, wherein this mixture may be concentrated to mix the concentrate homogeneously to prepare a W/O type emulsion, or may be mixed homogeneously without concentration to prepare a W/O type emulsion. In case of concentration, said mixture may be concentrated under a reduced pressure at a temperature not more than 60°C.

It is preferable that the lipophilic emulsifier is selected from a group consisting of glycerol fatty acid ester, glycerol acetic acid fatty acid ester, polyglycerol fatty acid ester having a HLB not more than 6, polyglycerol condensed ricinoleic acid ester, sucrose fatty acid ester having a HLB not more than 6 and sorbitan fatty acid ester having a HLB not more than 6.

It is preferable that the W/O type emulsion further contains additives selected from a group consisting of sugars such as maltose, glucose, dextrose, fructose, sorbitol, maltitol and saccharose and sugar alcohols of sorbitol and of maltitol.

A cream-containing chocolate may be produced by mixing the W/O type emulsion to a chocolate base material by kneading.

When the W/O type emulsion is mixed to a chocolate base material by kneading, to 100 parts of the chocolate base material, preferably a range of 3 to 100 parts of the W/O type emulsion may be mixed by kneading. In addition, this range may vary depending on type and amount of addition of said sugars and/or sugar alcohols, so that a suitable amount for mixing by kneading should be optionally selected depending on the type and the amount of addition of said sugars and/or sugar alcohols. However, the maximum value of addition of sugars and/or sugar alcohols to the W/O type emulsion should be not more than 55 % in the W/O type emulsion.

The chocolate base material may be either a chocolate base of tempering type or a chocolate base of nontempering type. Preferably, water in the chocolate base material may be 0.4 to 1.0 %. In addition, in the process of mixing by kneading, water may optionally be added.

By means of controling the milk fat content in the W/O type emulsion and the moisture content in the chocolate base material to which it is mixed by kneading, it is preferable that the cream-containing chocolate finally contains a water content of 2.0 to 3.0 % and a milk fat content not less than 6 %. In addition, in case of adding said sugars and/or sugar alcohols, preferably the final water content of the cream-containing chocolate may be 2.0 to 8.0 %.

According to the present invention, a cream which conventionally was very difficult to use for a chocolate except for by heating at a high temperature or by drying to powder can be successfully added to a chocolate, so that a cream-containing chocolate having a very fresh milk taste can be produced.

In addition, water is contained in the chocolate in a high content, which water exists as a stable W/O type emulsion, so that the conventional rapid increace of viscosity, appearance of sugar-blooms and appearance of rough feeling which occres when water is added to a chocolate can be avoided.

Generally, when water is included in a chocolate, a chocolate having a crunchy hardness is provided, while in the present invention, water exists in a system of W/O type emulsion, so that it has rather a softer feeling than those which do not contain water. A chocolate which has a soft feeling may be obtained by adding milk fat, nut fat, liquid fat or the like, however, in such cases, marked decreace of heat resistance is found on account of melting point depression of fat. On the contrary, the chocolate according to the present invention is superior in heat resistance than chocolates in which a fat of low melting point is added to make feeling soft. When a W/O type emulsion in which sugars are added is used, a softer cream-containing chocolate is provided than when a W/O type emulsion in which sugars are not added.

For usual garnish, truffle and the like, althouh a cream is used, the system is a O/W system, so that rapid shrinking and solidification by cooling take place which are not characteristic properties of chocolate. And they have a problem for processing in that they cannot be poured into a mold to make a plate chocolate. Moreover, water phase exists in outside in this system, so that there is a disadvantage that storage property is bad. On the contrary, in the cream-containing chocolate of the present invention, which is different from these, identical nature and storage property to an usual chocolate is provided.

According to the present invention, there is provided a chocolate and a method for producing it in which a high water content-containing component which has a higher water content and is fresher is mixed by kneading, in which a cream which is the freshest milk product is mixed by kneading directly to a chocolate without heating to provide a fresh milk taste.

The present invention will be explained in detail by following examples.

### Example 1

A cream of 47 % fat component was produced by separation from a raw milk by means of an usual method. To 100 parts of this cream 5 parts of polyglycerol condensed ricinoleic acid ester was mixed, and emulsified to provide phase conversion to form a W/O type emulsion.

And then, 95 parts of a bitter chocolate of tempering type which had been produced by an usual method was tempered to make a temperature 31°C, after which it was mixed with 5 parts of said W/O type emulsion which had been tempered to make same temperature 31°C to give a cream-containing chocolate, which was charged to a mold followed by cooling to take out from the mold to provide a product.

This chocolate contained 2.9 % of water and 3.0 % of milk fat content, which was a novel and excellent bitter chocolate which had a fresh milk flavor and taste, and gave a smooth melting in mouth.

### Example 2

A cream of 40 % fat component was produced by separation from a raw milk by means of an usual method. To 100 parts of this cream 2 parts of sucrose fatty acid ester (HLB 1) and 2 parts of soybean phospholipid were mixed, which was concentrated under a reduced pressure at 45°C to obtain 80 % of fat component, and emulsified to provide phase conversion to form a W/O type emulsion.

And then, 90 parts of a milk chocolate of tempering type which had been produced by an usual method was tempered to make a temperature 30°C, after which it was mixed with 10 parts of said W/O type emulsion which had been tempered to make same temperature 30°C to give a cream-containing chocolate, which was charged to a mold followed by cooling to take out from the mold to provide a product.

This chocolate contained 1.8 % of water and 13.4 % of milk fat content, which was an excellent milk chocolate which had a very strong fresh milk taste, and gave a smooth melting in mouth.

### Example 3

A cream of 45 % fat component was produced by separation from a raw milk by means of an usual method. To 100 parts of this cream 4 parts of polyglycerol fatty acid ester (HLB 3.7) was mixed, which was concentrated under a reduced pressure at 45 °C to obtain 75 % of fat component, to which 30 parts of sorbitol was added, and emulsified to provide phase conversion to form a W/O type emulsion.

And then, 75 parts of a milk chocolate of tempering type which had been produced by an usual method was tempered to make a temperature 42°C, after which it was mixed with 25 parts of said W/O type emulsion which had been tempered to make same temperature 42°C to give a cream-containing chocolate. This chocolate was enrobed on a sponge cake followed by cooling to produce a chocolate confection.

This chocolate contained 6.2 % of water and 18 % of milk fat content, which was an excellent milk chocolate which had a very strong fresh milk taste, and gave a smooth melting in mouth being very tasty meeting with the sponge cake.

## Claims

1. A cream-containing chocolate which contains about 1.8 to 10 % of moisture content and not less than 3 % of milk fat content, wherein the cream is a W/O type emulsion consisting of not less than 30 % of milk fat content and a lipophilic emulsifier is mixed in a chocolate base material by kneading.

2. The cream-containing chocolate according to claim 1, wherein the W/O type emulsion further contains additives selected from a group consisting of sugars such as maltose, glucose, dextrose, fructose, sorbitol, maltitol and saccharose and sugar alcohols of sorbitol and of maltitol.

3. The cream-containing chocolate according to claim 1 or 2, wherein the lipophilic emulsifier is selected from a group consisting of glycerol fatty acid ester, glycerol acetic acid fatty acid ester, polyglycerol fatty acid ester having a HLB not more than 6, polyglycerol condensed ricinoleic acid ester, sucrose fatty acid ester having a HLB not more than 6 and sorbitan fatty acid ester having a HLB not more than 6.

4. A method for producing the cream-containing chocolate according to claim 1 or 2, wherein the W/O type emulsion is mixed by kneading at a temperature not more than 45°C to a chocolate base material of tempering type or to a chocolate base material of nontempering type.

## Patentansprüche

1. Sahne enthaltende Schokolade mit einem Feuchtigkeitsgehalt von ca. 1,8 bis 10% und nicht weniger als 3% Milchfett, worin die Sahne eine nicht weniger als 30% Fett enthaltende Wasser/Öl-Emulsion ist und ein lipophiler Emulgator in eine Schokolade-Grundsusbstanz durch Kneten gemischt ist.

2. Sahne enthaltende Schokolade nach Anspruch 1, worin die Wasser/Öl-Emulsion desweiteren Zusatzstoffe enthält, die aus einer Gruppe gewählt wird, die aus Zuckern wie Maltose, Glukose, Dextrose, Fruktose, Sorbitol, Maltitol und Saccharose und aus Alkoholen der Zuckersorten Sorbitol und Maltitol besteht.

3. Sahne enthaltende Schokolade nach Anspruch 1 oder 2, worin der lipophile Emulgator aus einer Gruppe gewählt wird, die aus Glyzerin-Fettsäureester, Glyzerin-Essigsäure-Fettsäureester, Polyglyzerin-Fettsäureester mit einem HLB nicht höher als 6, mit Polyglyzerin kondensiertem Rizinusölsäure-Ester, Sukrose-Fettsäureester mit einem HLB nicht höher als 6 und Sorbit-Fettsäureester mit einem HLB-Wert nicht höher als 6 besteht.

4. Verfahren zur Herstellung der Sahne enthaltenden Schokolade nach Anspruch 1 oder 2, worin die Wasser/Öl-Emulsion durch Kneten bei einer Temperatur nicht höher als 45°in eine Schokolade-Grundsubstanz der mit Wasser anmachbaren Art oder der nicht mit Wasser anmachbaren Art gemischt wird.

## Revendications

1. Chocolat contenant de la crème, qui a une teneur en humidité comprise entre environ 1,8 et 10 % et une teneur en matières grasses du lait non inférieure à 3 %, la crème étant une émulsion du type W/O constituée par pas moins de 30 % de matières grasses, et un émulsifiant lipophile est mélangé par pétrissage dans une substance de base du chocolat.

2. Chocolat contenant de la crème selon la revendication 1, dans lequel l'émulsion du type W/O contient en outre des additifs choisis dans un groupe comprenant des sucres tels que le maltose, le glucose, le dextrose, le fructose, le sorbitol, le maltitol et le saccharose et des alcools des sucres sorbitol et maltitol.

3. Chocolat contenant de la crème selon la revendication 1 ou 2, dans lequel l'émulsifiant lipophile est choisi dans un groupe comprenant un ester d'acide gras du glycérol, un ester d'acide acétique et d'acide gras du glycérol, un ester d'acide gras du polyglycérol possédant une valeur HLB non supérieure à 6, un ester d'acide ricinoléïque condensé du polyglycérol, un ester d'acide gras de sucrose possédant une valeur HLB non supérieure à 6 et un ester d'acide gras de sorbitane possédant une valeur HLB non supérieure à 6.

4. Procédé pour fabriquer le chocolat contenant de la crème selon la revendication 1 ou 2, selon lequel on mélange l'émulsion du type W/O par malaxage à une température non supérieure à 45°C à un matériau de base du chocolat du type à délayage ou à une substance de base du chocolat du type sans délayage.
